# EUROPEAN PATENT APPLICATION

(11) **EP 4 495 778 A1**
(43) Date of publication of application: **22.01.2025**
(21) Application number: 24187079.9
(22) Date of filing: 08.07.2024
(51) Int. Cl.: G06F 9/50

(54) **BINARY TRANSLATION AND TASK DISPATCHING FOR ASYMMETRIC MULTICORE PROCESSORS**

(30) Priority: 17.07.2023 US 202363513903 P; 01.07.2024 US 202418760134
(71) Applicant: MediaTek Inc., 30078 Hsinchu City (TW)
(72) Inventor: SHEN, Bor-Yeh, Hsinchu City (TW)
(74) Representative: Hoefer & Partner Patentanwälte mbB

(57) **Abstract**

A computing device receives an application start request for an application through a dispatching service (302). The computing device determines whether the application uses a first instruction set architecture, ISA, or a second ISA using the dispatching service (304). The computing device determines whether the application is compute-bound or non-compute-bound in response to determining that the application uses the second ISA (306). The computing device performs binary translation to convert instructions based on the second ISA from the application to instructions based on the first ISA in response to determining that the application is compute-bound (310). The computing device executes the instructions based on the first ISA on one or more cores supporting the first ISA (310).

## Description

### CROSS-REFERENCE TO RELATED APPLICATION(S)

This application claims the benefits of U.S. Provisional Application Serial No. 63/513,903, entitled "BINARY TRANSLATION AND TASK DISPATCHING FOR ASYMMETRIC MULTICORE PROCESSORS" and filed on July 17, 2023, which is expressly incorporated by reference herein in their entirety.

### BACKGROUND

### Field

The present disclosure relates generally to computing devices, and more particularly, to techniques of binary translation and task dispatching for asymmetric multicore processors.

### Background

Asymmetric multicore processors (AMPs) have become increasingly popular in recent years, particularly in mobile devices and embedded systems. These processors combine high-performance cores (big cores) with energy-efficient cores (little cores) to achieve a balance between performance and power consumption. Traditionally, both big and little cores in an AMP system support the same instruction set architecture (ISA), allowing the operating system to seamlessly migrate tasks between the cores based on workload demands and energy constraints.

However, as the demand for higher performance and improved energy efficiency continues to grow, chip designers have started exploring new AMP configurations. One such trend is the introduction of asymmetric 32-bit systems-on-chip (SoCs), where the big cores only support 64-bit ISAs, while the little cores support both 32-bit and 64-bit ISAs. This design choice is motivated by the fact that supporting legacy 32-bit instructions on high-performance cores can increase the chip's area, power consumption, and complexity. By limiting the big cores to 64-bit only, designers can optimize their performance and efficiency.

The challenge arises when running legacy 32-bit applications on these asymmetric 32-bit SoCs. Since the big cores do not support 32-bit instructions, these applications are restricted to running on the little cores, which may not provide the desired level of performance. This can result in a significant degradation of user experience, especially for compute-intensive applications like games or media processing.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. A method, a computing device and a computer-readable medium according to the invention are defined in the independent claims. The dependent claims define preferred embodiments thereof.

In an aspect of the disclosure, a method, a computer-readable medium, and an apparatus are provided. The apparatus may be a computing device. The computing device receives an application start request for an application through a dispatching service. The computing device determines whether the application uses a first instruction set architecture (ISA) or a second ISA using the dispatching service. The computing device determines whether the application is compute-bound or non-compute-bound in response to determining that the application uses the second ISA. The computing device performs binary translation to convert instructions based on the second ISA from the application to instructions based on the first ISA in response to determining that the application is compute-bound. The computing device executes the instructions based on the first ISA on one or more cores supporting the first ISA.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating a computing device that includes hardware components and software components.
FIG. 2 is a diagram illustrating a computing device that executes software on processors, which include big cores and little cores.
FIG. 3 is a flow chart of a method (process) for dispatching an application to an appropriate execution path based on its instruction set architecture (ISA) and computational requirements.
FIG. 4 is a diagram illustrating another computing device that executes software on processors, which include big cores and little cores.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunications systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example aspects, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

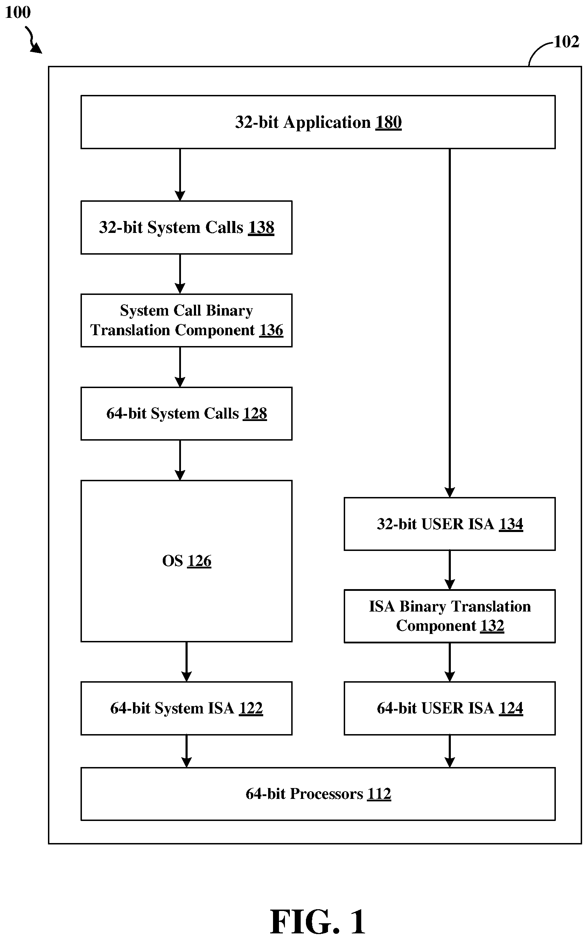

FIG. 1 is a diagram 100 illustrating a computing device 102 that includes hardware components 104 and software components 106. A computing device 102 includes hardware components 104 and software components 106. In particular, the hardware components 104 include one or more 64-bit processors 112, which are capable of executing 64-bit instructions. The hardware components 104 further include a system call binary translation component 136 and an ISA binary translation component 132. The software components 106 include an operating system (OS) 126.

32-bit applications 180 are written using 32-bit user instruction set architecture (ISA) 134 and make 32-bit system calls 138. To enable the 32-bit applications 180 to run on the 64-bit processors 112, the computing device 102 includes an ISA binary translation component 132 that translates the 32-bit user ISA 134 to 64-bit user ISA 124, and a system call binary translation component 136 that translates the 32-bit system calls 138 to 64-bit system calls 128.

Further, the OS 126 runs on the 64-bit processors 112 using system ISA 122. The OS 126 manages the execution of the translated instructions and system calls, interfacing with the system ISA 122, which directly interacts with the hardware components 104, including the 64-bit processors 112.

When a 32-bit application 180 is launched, the ISA binary translation component 132 translates the 32-bit user instructions into 64-bit user instructions that can execute directly on the 64-bit processors 112. Similarly, when the 32-bit application 180 makes 32-bit system calls 138, the system call binary translation component 136 translates these into 64-bit system calls 128 that the OS 126 can handle.

This binary translation occurs at the process level in user space. As the binary translation components render the system calls and instructions from the 32-bit application in 64-bit format, the OS 126 perceives and treats the 32-bit application 180 as a 64-bit application. As such, the OS 126 schedules the translated 32-bit application 180 to run on the 64-bit processors 112.

The binary translation involves translating 32-bit instructions to 64-bit, mapping 32-bit registers to 64-bit registers (which may require using 2 registers in 32-bit mode to hold a 64-bit value), and converting 32-bit system call numbers and parameters to their 64-bit equivalents. This allows legacy 32-bit applications to take advantage of the performance of 64-bit processors, especially high-performance cores in asymmetric multicore systems, without needing to recompile the applications.

Asymmetric multicore processors (AMPs) are becoming increasingly common, especially in mobile devices and embedded systems, due to their ability to provide higher performance and lower power consumption compared to homogeneous multiprocessors. In a typical AMP configuration, such as ARM's big.LITTLE architecture, the system includes a mix of large, high-performance cores (big cores) and small, power-efficient cores (little cores). Conventionally, both big and little cores support the same instruction set architecture (ISA), allowing the operating system to transparently migrate processes between the cores based on performance and power requirements.

However, as the demand for higher performance and energy efficiency grows, chip designers are exploring new AMP configurations. One such trend is the introduction of asymmetric 32-bit SoCs, where the big cores support only 64-bit ISAs, while the little cores support both 32-bit and 64-bit ISAs. This design choice is motivated by the fact that supporting legacy 32-bit instructions on high-performance cores can increase the chip's area, power consumption, and complexity. By limiting the big cores to 64-bit only, designers can optimize their performance and efficiency.

The problem arises when running legacy 32-bit applications on these asymmetric 32-bit SoCs. Since the big cores do not support 32-bit instructions, these applications are restricted to running on the little cores, which may not provide the desired level of performance. This can result in a significant degradation of user experience, especially for compute-intensive applications like games.

To mitigate this, binary translation is employed to convert 32-bit instructions into 64-bit instructions, enabling these legacy applications to run on the high-performance big cores. This translation occurs at the process level in user space, involving two main components: an ISA binary translation component and a system call binary translation component. The ISA binary translation component translates 32-bit user instructions to 64-bit user instructions, while the system call binary translation component translates 32-bit system calls to their 64-bit equivalents.

For example, the computing device 102 addresses this issue using binary translation. The ISA binary translation component 132 translates 32-bit user instructions to 64-bit instructions, and the system call binary translation component 136 translates 32-bit system calls to 64-bit system calls. This allows 32-bit applications to utilize the big cores for higher performance.

A challenge arises when running legacy 32-bit applications 180 on asymmetric 32-bit systems where the one or more 64-bit processors 112, or big cores, only support 64-bit ISAs. The conventional approach, restricts these applications to run on the little cores, leading to performance issues due to the limited processing capability of the little cores.

One approach to address this issue is recompiling 32-bit applications for the 64-bit architecture. However, this may not always be feasible due to the unavailability of source code for all applications.

Another approach is binary translation, which translates instructions from the 32-bit user ISA 134 to 64-bit user ISA 124, allowing 32-bit applications 180 to execute on the 64-bit processors 112. However, not all instructions can be translated offline. Some instructions rely on runtime information, such as interrupt branches or dynamically generated code, making it impossible to translate them beforehand. This limitation necessitates runtime translation, which can introduce overhead due to the on-the-fly nature of the translation process.

For example, the process of translating instructions during execution incurs overhead compared to executing native instructions. Emulating the behavior of specific 32-bit instructions on the 64-bit architecture can introduce additional computational steps. Translating system calls 138 from 32-bit to 64-bit format involves overhead in mapping parameters and handling differences in system call conventions.

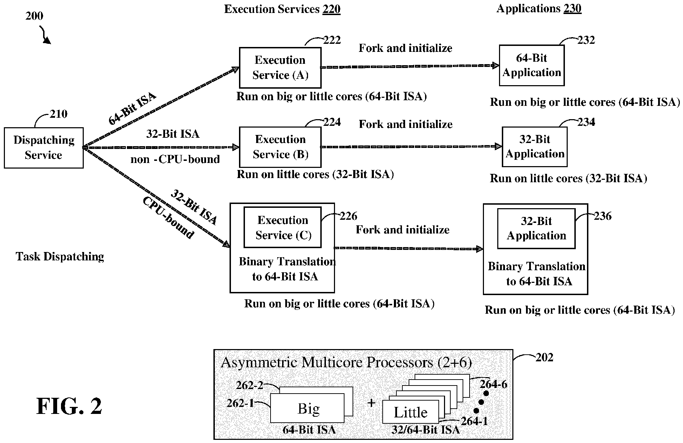

FIG. 2 is a diagram 200 illustrating a computing device 202 that executes software on processors 260, which includes big cores 262-1 and 262-2, and little cores 264-1 through 264-6. The computing device employs a dispatching service 210 and execution services 220 to efficiently run applications 230 on the asymmetric multicore processors 260.

The dispatching service 210 accepts application requests and determines the appropriate execution path based on the application's instruction set architecture (ISA) and computational requirements. When an application start request is received, the dispatching service 210 checks if the application uses the new 64-bit ISA or the old 32-bit ISA.

For applications using the new 64-bit ISA, such as application 232, the dispatching service 210 passes the application information (e.g., application name, file path) to the execution service A 222. The execution service A 222 then forks a new child process or selects a pre-forked child process, which loads the application data and initializes itself to run the application 232 on either the big cores 262-1 and 262-2 or the little cores 264-1 through 264-6, as determined by the operating system's scheduling policy.

For applications using the old 32-bit ISA, the dispatching service 210 determines whether the application is CPU-bound or non-CPU-bound. Non-CPU-bound applications, such as application 234, are typically I/O-bound or lightweight and do not require significant computational power. In this case, the dispatching service 210 passes the application information to the execution service B 224, which forks a new child process or selects a pre-forked child process to run the application 234 directly on the little cores 264-1 through 264-6 using the old 32-bit ISA. This approach avoids the overhead of binary translation for applications that do not require the performance benefits of running on the big cores.

On the other hand, CPU-bound applications using the old 32-bit ISA, such as application 236, are dispatched to the execution service C 226. The execution service C 226 employs binary translation to convert the application's 32-bit ISA to the new 64-bit ISA, enabling it to run on either the big cores 262-1 and 262-2 or the little cores 264-1 through 264-6. This allows the CPU-bound application 236 to take advantage of the higher performance offered by the big cores, even though it was originally written for the old 32-bit ISA.

The decision to perform binary translation for CPU-bound applications is based on the trade-off between the performance gains of running on the big cores and the overhead introduced by the translation process. In certain scenarios, the performance of the big cores can be 3-4 times higher than that of the little cores, while the binary translation overhead is typically around 10-20%. Therefore, even with the translation overhead, running a CPU-bound application on the big cores after binary translation can result in a 2-3 times performance improvement compared to running it directly on the little cores.

The dispatching service 210 can employ various policies to determine whether an application is CPU-bound or non-CPU-bound. These policies may include using a static whitelist or blacklist of application signatures, collecting runtime profile results, or training an AI model to make dispatching decisions based on application features and historical data.

When an execution service (A 222, B 224, or C 226) receives application information, it forks a new child process or selects a pre-forked child process. The child process then loads the application data and initializes itself to run the application on one of the processors 260. The selection of a big core 262 or a little core 264 depends on the execution service and the application's requirements. For instance, execution service C 226, which uses binary translation, can run on either a big core 262 or a little core 264, as both support the 64-bit ISA after translation.

The selection of a big core 262 or a little core 264 for executing a translated application depends on the operating system's scheduling policy. The operating system manages the execution of tasks on asymmetric multicore processors by using CPU affinity masks. These masks determine which tasks can be scheduled on the big cores or little cores.

In this example, the dispatching service 210 decides whether an application requires binary translation based on its instruction set architecture (ISA) and computational requirements. However, the actual scheduling of the translated application to a specific core is handled by the operating system 126.

When the execution service C 226 runs a translated 32-bit application using the 64-bit ISA, it creates a child process that is perceived by the operating system 126 as a 64-bit application. The operating system 126 is then responsible for scheduling this child process to either a big core 262 or a little core 264, depending on factors such as the current system load, power requirements, and the application's performance characteristics.

For example, if the system is under heavy load and the translated application is competing with other high-priority tasks, the operating system 126 may choose to schedule it on a little core 264 to balance the load and maintain responsiveness. Conversely, if the system is idle and the translated application is the only active task, the operating system 126 may schedule it on a big core 262 to maximize its performance.

Furthermore, the operating system 126 can dynamically migrate the translated application between big cores 262 and little cores 264 based on runtime performance monitoring and power considerations. If the application's performance on a little core 264 is deemed insufficient, the operating system 126 can move it to a big core 262 for faster execution. Similarly, if the application is consuming too much power on a big core 262 and there are no significant performance gains, the operating system 126 may move it back to a little core 264 to conserve energy.

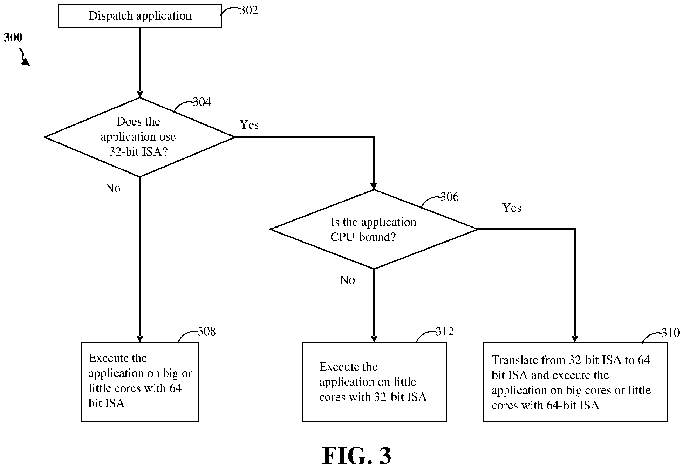

FIG. 3 is a flow chart 300 of a method (process) for dispatching an application to an appropriate execution path based on its instruction set architecture (ISA) and computational requirements. In operation 302, the dispatching service 210 receives an application start request. It then determines, in operation 304, whether the application uses the old 32-bit ISA or the new 64-bit ISA.

If the application uses the new 64-bit ISA, the process proceeds to operation 308. In operation 308, the application is executed on either the big cores 262 or the little cores 264, as determined by the operating system's scheduling policy. This execution path is suitable for applications that are natively compiled for the 64-bit architecture and do not require binary translation.

If the application uses the old 32-bit ISA, the process moves to operation 306, where the dispatching service 210 assesses whether the application is CPU-bound or non-CPU-bound. For non-CPU-bound applications, which are typically I/O-bound or lightweight and do not require significant computational power, the process proceeds to operation 312. In this case, the application is executed directly on the little cores 264 using the old 32-bit ISA. By avoiding the overhead of binary translation for these applications, the system can maintain power efficiency and responsiveness.

On the other hand, if the application is CPU-bound and requires substantial computational resources, the process moves to operation 310. Here, the application undergoes binary translation from the old 32-bit ISA to the new 64-bit ISA. This translation process, performed by the execution service C 226, allows the CPU-bound application to take advantage of the higher performance offered by the big cores 262.

After the binary translation, the translated application can be executed on either the big cores 262 or the little cores 264, depending on the operating system's scheduling decisions. The choice between big and little cores for the translated application is based on factors such as the current system load, power requirements, and the application's performance characteristics.

The dispatching service 210 and the execution services 220 (A 222, B 224, and C 226) work together to implement this process. The dispatching service 210 makes the initial decision on whether to use binary translation based on the application's ISA and computational requirements. The execution services 220 then handle the actual execution of the applications, either directly or through binary translation.

The dispatching service 210 can use several possible policies to address this challenge. One approach is to use static dispatching with a whitelist or blacklist of application signatures. This approach involves creating a list of applications that are known to be either CPU-bound or non-CPU-bound. The dispatching service 210 can then consult this list when deciding whether to use binary translation for a given application 180.

For example, a whitelist could include applications that are known to benefit significantly from running on the big cores 262, such as games or other computationally intensive applications. Conversely, a blacklist could include applications that are known to perform well on the little cores 264 or are sensitive to the overhead of binary translation, such as simple utility applications or I/O-bound applications.

The application signature can include various identifiers, such as:
- Application name: The name of the application, as it appears to the user.
- Application category: A broader classification of the application, such as "game," "productivity," or "communication."
- Library dependency: The libraries or frameworks that the application relies on, which can indicate its functionality and computational requirements.

Another approach is to collect runtime profile results of applications and use this information to make dispatching decisions. This approach involves monitoring the CPU usage, performance, and other relevant metrics of applications as they run on the computing device 102.

For example, if the dispatching service 210 initially dispatches an application to run on the little cores 264 without binary translation and observes that the little cores' CPUs are consistently fully utilized, it may indicate that the application is CPU-bound. Additionally, if the application experiences performance issues, such as low frame rates or lag, it further suggests that the application could benefit from running on the big cores 262. In such cases, the dispatching service 210 can choose to route the application through binary translation and make it available to be run on the big cores 262 for subsequent executions.

Furthermore, the runtime profile information collected from various applications can also be used as training data for an AI model. This model can be trained to identify patterns and correlations between application characteristics and their computational requirements. By analyzing features such as application category, library dependencies, and historical performance data, the AI model can predict whether an application is likely to be CPU-bound.

Once trained, the AI model can assist the dispatching service 210 in making more informed and dynamic dispatching decisions.

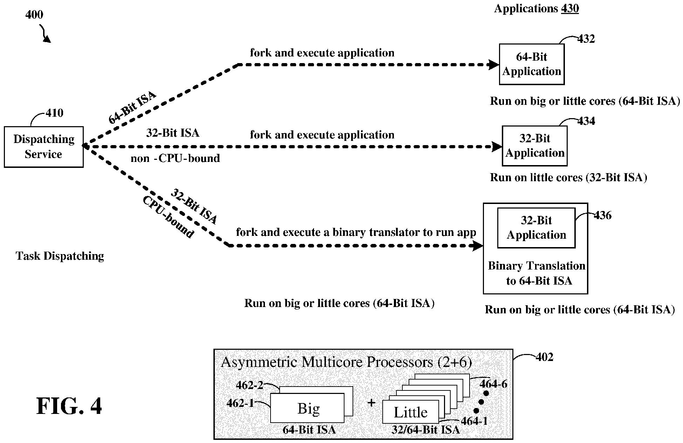

FIG. 4 is a diagram 400 illustrating a computing device 402 that executes software on processors 460, which includes big cores 462-1 and 462-2, and little cores 464-1 through 464-6. The computing device employs a dispatching service 410 to run applications 430 on the asymmetric multicore processors 460.

The dispatching service 410 accepts application requests and determines the appropriate execution path based on the application's instruction set architecture (ISA) and computational requirements. When an application start request is received, the dispatching service 410 checks if the application uses the new 64-bit ISA or the old 32-bit ISA.

For applications using the new 64-bit ISA, such as application 432, the dispatching service 410 forks a new child process that executes the application directly on either the big cores 462-1 and 462-2 or the little cores 464-1 through 464-6, as determined by the operating system's scheduling policy.

For applications using the old 32-bit ISA, the dispatching service 410 determines whether the application is CPU-bound or non-CPU-bound. Non-CPU-bound applications, such as application 434, are typically I/O-bound or lightweight and do not require significant computational power. In this case, the dispatching service 410 forks a new child process that executes the application directly on the little cores 464-1 through 464-6 using the old 32-bit ISA. This approach avoids the overhead of binary translation for applications that do not require the performance benefits of running on the big cores.

On the other hand, CPU-bound applications using the old 32-bit ISA, such as application 436, are dispatched to a binary translator. The dispatching service 410 forks a new child process that executes the binary translator, which loads and runs the CPU-bound application. The binary translator converts the application's 32-bit ISA to the new 64-bit ISA, enabling it to run on either the big cores 462-1 and 462-2 or the little cores 464-1 through 464-6. This allows the CPU-bound application 436 to take advantage of the higher performance offered by the big cores, even though it was originally written for the old 32-bit ISA.

The main difference between FIG. 2 and FIG. 4 is the absence of execution services in FIG. 4. In certain configurations, all applications on a computing device are run within a Java Virtual Machine (JVM). The execution services in FIG. 2 represent pre-initialized JVMs that are ready to execute applications, reducing the startup time. In contrast, FIG. 4 illustrates a scenario where the dispatching service directly forks child processes to execute applications or the binary translator, without the intermediate execution services. This approach may result in slightly longer startup times, as the JVM needs to be initialized for each application, but the end result is the same.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for".

## Claims

1. A method of operation of a computing device, comprising:
receiving, by a dispatching service, an application start request for an application (302);
determining, by the dispatching service, whether the application uses a first instruction set architecture, in the following also referred to as ISA, or a second ISA (304);
in response to determining that the application uses the second ISA, determining whether the application is compute-bound or non-compute-bound (306);
in response to determining that the application is compute-bound, performing binary translation to convert instructions based on the second ISA from the application to instructions based on the first ISA (310); and
executing the instructions based on the first ISA on one or more cores supporting the first ISA (310).

2. The method of claim 1, further comprising:
in response to determining that the application uses the first ISA, executing the application on one or more cores supporting the first ISA without performing binary translation (308).

3. The method of claim 1 or 2, further comprising:
in response to determining that the application is non-compute-bound, executing the application on one or more cores supporting the second ISA without performing binary translation (312).

4. The method of any one of claims 1 to 3, wherein the application is determined to be compute-bound or non-compute-bound according to a static dispatching policy based on an application signature, wherein the application signature includes at least one of an application name, an application category, and a library dependency.

5. The method of any one of claims 1 to 4, further comprising:
collecting runtime profile results of the application, wherein the application is determined to be compute-bound or non-compute-bound according to the runtime profile results; and/or
wherein the application is determined to be compute-bound or non-compute-bound according to an artificial intelligence (AI) model pre-trained with runtime profile results.

6. The method of any one of claims 1 to 5, wherein performing binary translation comprises at least one of:
translating instructions from the second ISA to the first ISA;
mapping registers from the second ISA to registers of the first ISA; and
converting system calls from a format of the second ISA to a format of the first ISA.

7. The method of any one of claims 1 to 6, wherein the first ISA is a 64-bit ISA and the second ISA is a 32-bit ISA; and/or
wherein the one or more cores supporting the first ISA are one or more high-performance cores, and wherein the computing device further comprises one or more low-performance cores supporting the second ISA.

8. The method of any one of claims 1 to 7, further comprising:
in response to determining that the application uses the second ISA and is compute-bound, passing application information to a first execution service that initiates the binary translation.

9. The method of claim 8, wherein the first execution service provides a first forked process, wherein the binary translation is performed by the first forked process, wherein the first forked processes executes the instructions based on the first ISA on one or more cores supporting the first ISA.

10. The method of any one of claims 1 to 9, further comprising:
in response to determining that the application uses the second ISA and is non-compute-bound, passing application information to a second execution service that does not initiate the binary translation.

11. The method of claim 10, wherein the second execution service forks a second child process that executes the application on one or more cores supporting the second ISA.

12. The method of any one of claims 1 to 11, further comprising:
in response to determining that the application uses the first ISA, passing application information to a third execution service that does not initiate the binary translation.

13. The method of claim 12, wherein the third execution service forks a third child process that executes the application on one or more cores supporting the first ISA.

14. A computing device (102), comprising:
one or more processors (112); and
memory storing instructions that, when executed by the one or more processors (112), cause the computing device (102) to perform the method steps as defined in any one of the preceding claims 1 to 13.

15. A computer-readable medium storing computer executable code for operation of a computing device, comprising code to perform the method steps as defined in any one of the preceding claims 1 to 13.
